# EUROPEAN PATENT APPLICATION

(11) **EP 2 037 373 A2**
(43) Date of publication of application: **18.03.2009**
(21) Application number: 08001532.4
(22) Date of filing: 28.01.2008
(51) Int. Cl.: G06F 17/22, G06F 17/27

(54) **A method and a system for automatic extraction of requirements**

(30) Priority: 14.09.2007 EP 07018121
(71) Applicant: SIEMENS AKTIENGESELLSCHAFT, 80333 München (DE)
(72) Inventor: Boulila, Naoufel, Dr., 80809 München (DE)

(57) **Abstract**

A method for automatic extraction of requirements from an initial requirement specification document (RSD) written in a natural language, comprising the following steps:
(a) transforming the requirement specification document (RSD) automatically into a corresponding structured requirement specification document (SRD) which specifies the requirements in a predetermined template form comprising for each requirement a set of requirement attributes;
(b) retransforming automatically the structured requirement specification document (SRD) into an updated requirement specification document (RSD') until each requirement attribute fulfils a predetermined syntactical and semantical attribute definition of said requirement attribute.

## Description

The invention relates to a method and a system for automatic extraction of requirements from an initial requirement specification document (RSD) written in a natural language.

When formulating requirements for a project or a product, these requirements are often formulated in a requirement specification document (RSD) written in a natural language, such as German or English. Natural information languages are relatively easy to understand for non-requirement engineers and specific domain users while describing the requirements in terms of needs without any constraints. However, documents written in a natural language are often ambiguous, inconsistent or incomplete and inaccurate. This makes the automatic extraction of requirements very difficult and leads often to ambiguous specifications.

Accordingly, it is an object of the present invention to provide a method and a system for automatic extraction of requirements from an initial requirement specification document written in a natural language generating an inambiguous specification.

This object is achieved by a method for automatic extraction of requirements from an initial requirement specification document written in a natural language comprising the following steps:
- transforming the requirement specification document (RSD) automatically into a corresponding structured requirement specification document (SRD) which specifies the requirements in a predetermined template form comprising for each requirement a set of requirement attributes;
- retransforming automatically the structured requirement specification document (SRD) into an updated requirement specification document (RSD') until each requirement attribute fulfils a predetermined syntactical and semantical attribute definition of said requirement attribute.

In an embodiment of the method according to the present invention, the structured requirement specification document (SRD) complies with the predetermined requirement template definition (RTD).

In an embodiment of the method according to the present invention, a use case specification document (USD) which specifies at least one use case in a predetermined use case template form (UTF) is generated from the structured requirement specification document (SRD).

In an embodiment of the method according to the present invention, a test case specification document (TSD) which specifies at least one test case in a predetermined test case template form (TTF) is generated from said use case specification document (USD).

In an embodiment of the method according to the present invention, a natural language processing unit analyzes and extracts the requirements according to a natural language processing definition document (NLPDD) which defines rules of the natural language in which the initial requirement specification document (RSD) is written and according to an imperative definition document (IDD) which describes imperatives used by the structured requirement specification document (SRD).

In an embodiment of the method according to the present invention, each imperative of said imperative definition document (IDD) corresponds to a predetermined priority.

In an embodiment of the method according to the present invention, the structured requirement specification document (SRD) is generated by the natural language processing unit. In an embodiment of the method according to the present invention, the requirement template definition (RTD) comprises user defined requirement attributes.

In an embodiment of the method according to the present invention, the requirement attributes comprise
a requirement identification,
a requirement description,
a requirement rationale,
a requirement priority,
a requirement benefit,
a requirement dependency,
a requirement author,
a requirement status,
a requirement realization degree,
a requirement group,
a requirement supporting material,
a requirement history.

In an embodiment of the method according to the present invention, the test case specification document (TSD) complies with a predetermined test case template definition (TTD) .

In an embodiment of the method according to the present invention, the use case template definition (UTD) and the test case template definition (TTD) are language-dependent.

In an embodiment of the method according to the present invention, a target language of said use case specification document (USD) is the same or different from a source language of the structured requirement specification document (SRD).

In an embodiment of the method according to the present invention, the target language of the test case specification document (TSD) is the same or different from a source language of the use case specification document (USD).

The invention further provides a system for automatic extraction of requirements from an initial requirement specification document (RSD) written in a natural language comprising:
- means for transforming the requirement specification document (RSD) into a corresponding structured requirement specification document (SRD) which specifies each requirement in a predetermined template form comprising for each requirement a set of requirement attributes;
- means for retransforming the structured requirement specification document (SRD) into an updated requirement specification document (SRD') until each requirement attribute fulfils a predetermined syntactical and semantical attribute definition of said requirement attribute.

In a preferred embodiment of the system according to the present invention, the means for transforming and the means for retransforming are formed by data processing units.

In an embodiment of the system according to the present invention, a natural language processing unit analyzes and extracts requirements according to a natural language processing definition document (NLPDD) which defines rules of the natural language in which the initial requirement specification document (RSD) is written, and according to an imperative definition document (IDD) which describes imperatives used by the structured requirement specification document (SRD) to transform iteratively the requirement specification document (RSD) into a corresponding structured requirement specification document (SRD).

In an embodiment of the system according to the present invention, the natural language processing unit comprises an inference engine and a data base.

In the following, preferred embodiments of the method and system according to the present invention are described with reference to the enclosed figures.
Figure 1 shows a flowchart of a possible embodiment of the method for automatic extraction of requirements according to the present invention;
Figure 2 shows a diagram of illustrating a system for automatic extraction of requirements according to the present invention;
Figure 3 shows a block diagram of a possible embodiment of the system for automatic extraction of requirements according to the present invention;
Figure 4 shows a flowchart of a possible embodiment of a method for automatic extraction of requirements according to the present invention.

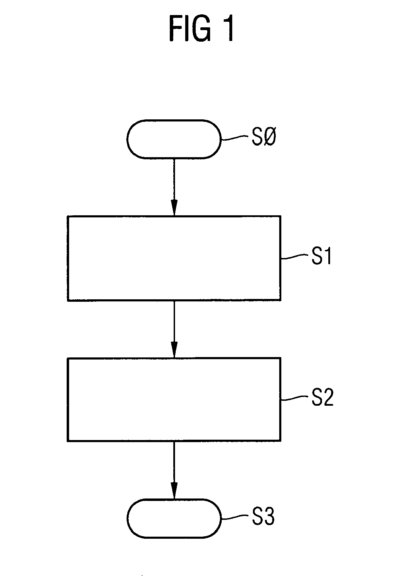

As can be seen from figure 1 showing an embodiment of a method for automatic extraction of requirements according to the present invention, the method comprises a transforming step S1 and a retransforming step S2.

In step S1, the requirement specification document RSD written in a natural language, such as German or English is automatically transformed into a corresponding structured requirement specification document SRD which specifies said requirements in a predetermined template form comprising for each requirements a set of requirement attributes.

The structured requirement specification document RSD formed in this way complies with a predetermined template definition RTD.

In a further step S2, the formed structured requirement specification document SRD is retransformed into an updated requirement specification document RSD' until each requirement attribute fulfils a predetermined synctactical and semantical attribute definition of said requirement attribute. The process stops in step S3.

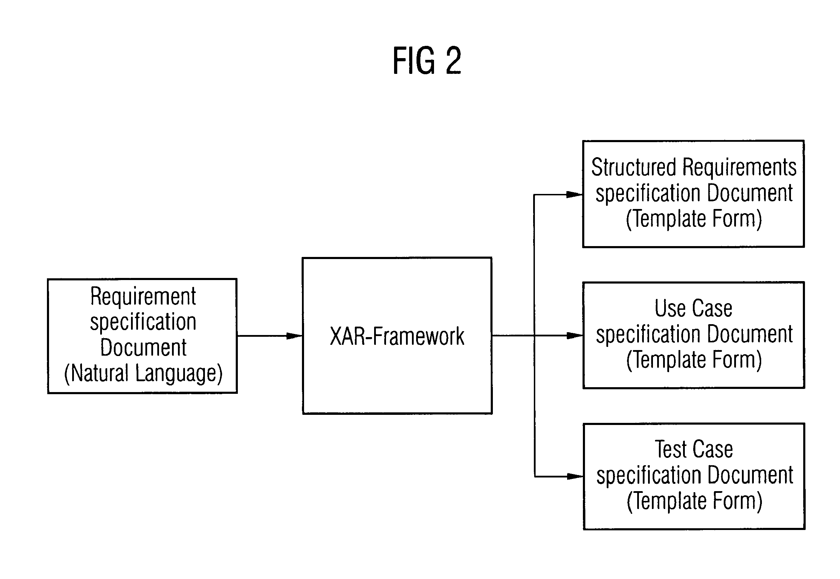

Figure 2 shows an XAR (Extraction Automatic Requirements) -frame work for illustrating the functionality of the method according to the present invention. The requirement specification document RSD written in a natural language is input to the XAR-frame work which generates different documents as an output, i. e. the structured requirement specification document SRD in a template form, a use case specification document USD in a template form and a test case specification document TSD in a template form.

The use case specification document USD specifies at least one use case in a predetermined use case template form UTF and is generated from the structured requirement specification document SRD.

The test case specification document TSD output by the XAR-frame work as shown in figure 2 specifies at least one test case in a predetermined test case template form TTF and is generated from the use case specification document USD.

In the XAR-frame work, a natural language processing unit analyzes and extracts the requirements according to a natural language processing definition document NLPDD which defines rules of the natural language in which the initial requirement specification document RSD is written and, further, according to an imperative definition document IDD which describes imperatives used by said structured requirement specification document RSD. The imperative definition document IDD describes possible imperatives that can be used when describing the structured requirement specification document SRD, such as "shall", "must", "is required to" and "should".

Each imperative can correspond in a possible embodiment to a given predefined priority. These definitions can be updated and modified according to the needs without affecting the processing units.

The structured requirement specification document SRD describes a requirement in a template form which can be specified individually and according to specific needs. The template form may contain all or some of the attributes describing said requirements. A possible default template can be used if no user defined template is provided. A possible default template is described in "IEEE Recommended Practice for Software Requirement Specifications, IEEE STD 830-1993".

The use case specification document USD describes use cases in a template form and is generated based on the structured requirement specification document SRD and a use case template form UTF which can be specified individually and according to specific needs. The use case specification document USD can be generated in a different language and description as compared to the original requirement specification document RSD.

In a possible embodiment, a default template of the use case specification document USD is used.

The test case specification document TSD describes test cases in a template form which can be specified individually and according to specific needs.

The test case specification document TSD is generated mostly from the use case specification document USD. The use case specification document USD can be generated in a different language description as the original requirement specification document RSD.

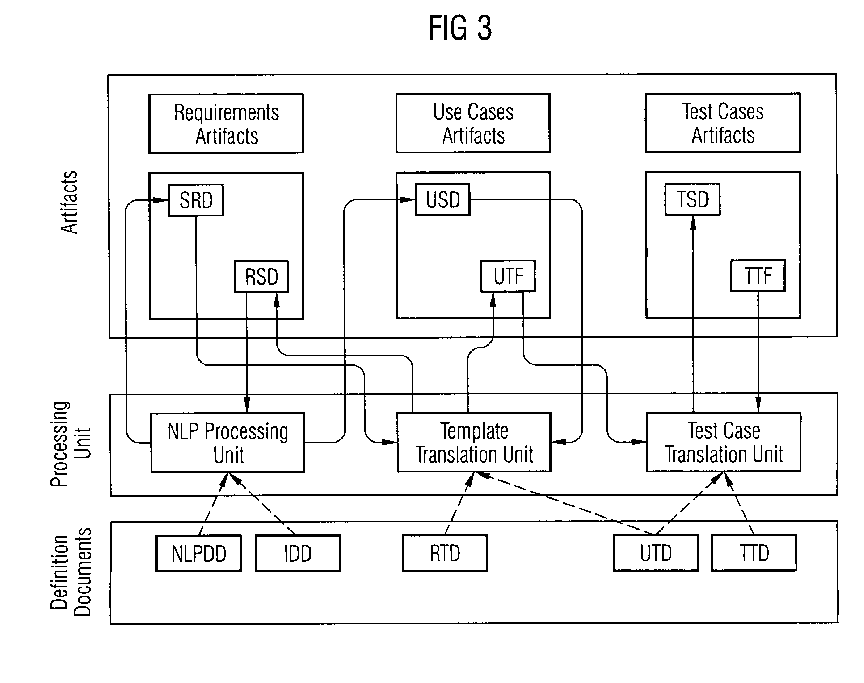

Figure 3 shows a possible embodiment of a system for automatic extraction of requirements from an initial requirement specification document RSD written in a natural language. The system comprises several processing units. In the embodiment as shown in figure 3, the system comprises a natural language processing unit 1, a template translation unit 2 and a test case translation unit 3. The processing units 1, 2, 3 can be formed by the same or by different processors. A natural language processing unit 1 can comprise an inference engine and a data base. The natural language processing unit 1 analyzes and extracts requirements according to the natural language processing definition document NLPDD as shown in figure 3. This natural language processing definition document NLPDD defines rules of the natural language in which the initial requirement specification document RSD is written and according to the imperative definition document IDD as shown in figure 3. The imperative definition document IDD describes imperatives used by the structured requirement specification document RSD to transform iteratively the requirement specification document RSD into a corresponding structured requirement specification document SRD. Accordingly, the structured requirement specification document SRD is generated by the NLP processing unit 1 and describes requirements in structured form using formulation statements by means of the predefined imperatives as defined by the imperative definition document IDD.

The use case specification document USD which specifies at least one use case in a predetermined use case template form UTF is generated from the structured requirement specification document SRD. If the target language is the same as the source language, the use case template definition UTD is ignored in a possible embodiment.

Finally, the test case specification document TSD is generated by the test case translation unit 3 from the use case specification document USD. The test case specification document TSD complies with the test case template form TTF and a predefined language-dependent test case template definition TDD as shown in figure 3. If the target language is the same as the source language, the test case template definition TDD can be ignored.

In a possible embodiment, the various template forms, such as the use case template form UTF and the test case template form TTF as well as the language-dependent definitions, such as the requirement template definition RTD or a use case template definition UTD and the test case template definition TDD can be defined by the frame work users and can be modified at any time according to the their needs. The regeneration of the requirement specification document RSD, the use case specification document USD and the test case specification document TSD is then necessary to obtain an updated document. The requirement specification document RSD written in a natural language, such as English, is provided to the XAR-frame work as shown in figure 3 as input which, after various processing or iteration steps, delivers as output documents the structured requirement specification document SRD, the use case specification document USD and the test case specification document TSD. The natural language processing unit 1 takes the requirement specification document RSD as input and delivers as a structured document the structured requirement specification document SRD according to the definitions laid down in the imperative definition document IDD.

The template translation processing unit 2 translates the requirement specification document RSD into a template form document as defined in the requirement template definition RTD.

The structured requirement specification document RSD which complies with the predetermined requirement template definition RTD can comprise user defined requirement attributes. These requirement attributes can comprise a requirement identification, a requirement description, a requirement rationale, a requirement priority, a requirement benefit, a requirement dependency, a requirement author, a requirement status, a requirement realization degree, a requirement group, a requirement supporting material and a requirement history. The XAR-frame work as shown in figure 3 transforms the requirement specification document RSD into a set of documents, such as a structured requirement specification document SRD, use cases and test cases using natural language processing (NLP) according to user predefined template forms. The XAR-frame work as shown in figure 3 makes it possible that a requirement specification written in a natural language L1 results in a corresponding use case and test case specification in another language L2.

To avoid inambiguouty, the language processor can automatic extract lexical, synthetic and semantic errors in the documents written in the natural language.

The method and system according to the present invention can be used for automatic requirement extraction during the development of any product, such as a software product or during any projects, such as product development projects.

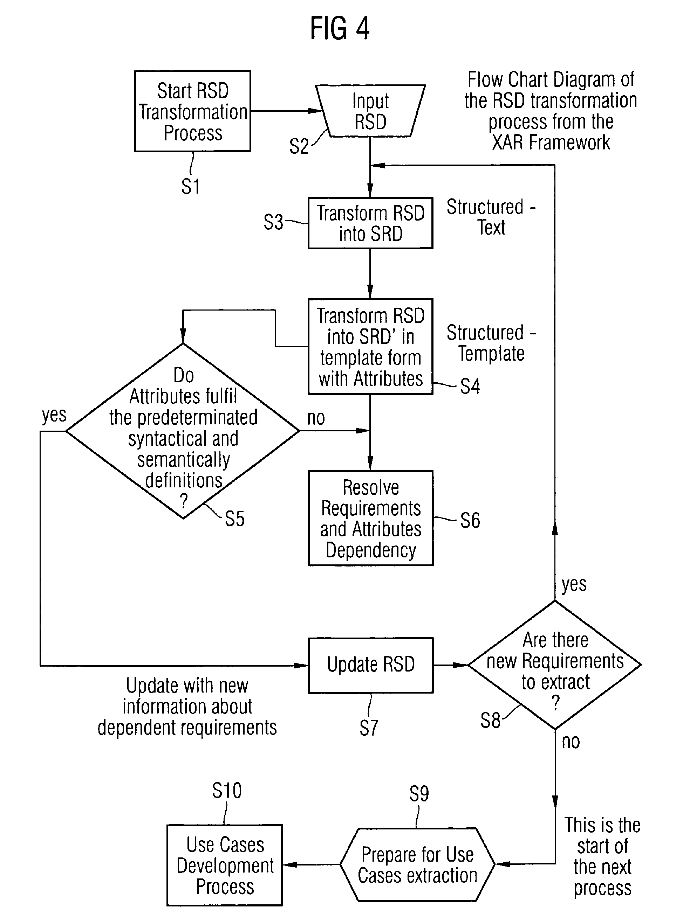

Figure 4 shows a flowchart diagram of a possible embodiment of the requirement specification document during a transformation process performed by the XAR-frame work as shown in figure 3.

In step S1, the RSD-transformation process is started. The requirement specification document RSD is applied to the XAR-frame work in step S2. The natural language processing unit 1 transforms the unstructured requirement specification document RSD into the structured requirement specification document SRD in step S3. This structured requirement specification document SRD is transformed into a predetermined template form to form a modified structure requirement specification document SRD' in step S4.

In step S5, it is checked whether all attributes fulfil a predetermined synthetical and semantical definition. If the attributes do not fulfil these definitions, the requirements and attributes dependency is resolved in step S6.

On the other hand, if all attributes fulfil the predetermined synthetical and semantical definitions, the requirement specification document RSD is updated in step S6 with additional information about dependent requirements in step S7.

In step S8 it is checked whether there are further requirements to extract. If there are further requirements, the process returns to step S3 as shown in figure 4. If there are no further requirements, the use case extraction is prepared in step S9 to provide a use case development process in step S10.

The method and system according to the present invention facilitate the automatic extraction of requirements and lead to the generation of unambiguous specifications. Furthermore, it is possible to generate automatically use case and test case specifications with possible intervention of the user and domain experts.

The method according to the present invention can be performed by any computer and by any computer platform. In a possible embodiment, the method according to the present invention is performed by a computer program having instructions for performing the method according to the present invention. This computer program can be stored on a data carrier.

## Claims

1. A method for automatic extraction of requirements from an initial requirement specification document (RSD) written in a natural language, comprising the following steps:
(a) transforming the requirement specification document (RSD) automatically into a corresponding structured requirement specification document (SRD) which specifies the requirements in a predetermined template form comprising for each requirement a set of requirement attributes;
(b) retransforming automatically the structured requirement specification document (SRD) into an updated requirement specification document (RSD') until each requirement attribute fulfils a predetermined syntactical and semantical attribute definition of said requirement attribute.

2. The method according to claim 1 wherein the structured requirement specification document (SRD) complies with a predetermined requirement template definition (RTD).

3. The method according to claim 1 wherein a use case specification document (USD) which specifies at least one use case in a predetermined use case template form (UTF) is generated from the structured requirement specification document (SRD).

4. The method according to claim 3 wherein a test case specification document (TSD) which specifies at least one test case in a predetermined test case template form (TTF) is generated from said use case specification document (USD).

5. The method according to claim 1 wherein a natural language processing unit analyses and extracts the requirements according to a natural language processing definition document (NLPDD) which defines rules of the natural language in which the initial requirement specification document (RSD) is written and according to an imperative definition document (IDD) which describes imperatives used by said structured requirement specification document (SRD).

6. The method according to claim 5 wherein each imperative of said imperative definition document (IDD) corresponds to a predetermined priority.

7. The method according to claim 5 wherein said structured requirement specification document (SRD) is generated by said natural language processing unit.

8. The method according to claim 2 wherein said requirement template definition (RTD) comprises user defined requirement attributes.

9. The method according to claim 8 wherein said requirement attributes comprise
a requirement identification,
a requirement description,
a requirement rationale,
a requirement priority,
a requirement benefit,
a requirement dependency,
a requirement author,
a requirement status,
a requirement realization degree,
a requirement group,
a requirement supporting material,
a requirement history.

10. The method according to claim 4 wherein said test case specification document (TSD) complies with a predetermined test case template definition (TTD).

11. The method according to claim 10 wherein said use case template definition (UTD) and said test case template definition (TTD) are language dependent.

12. The method according to claim 3 wherein a target language of said use case specification document (USD) is the same or different from a source language of said structured requirement specification document (SRD).

13. The method according to claim 4 wherein a target language of said test case specification document (TSD) is the same or different from a source language of said use case specification document (USD).

14. A system for automatic extraction of requirements from an initial requirement specification document (RSD) written in a natural language comprising:
(a) means for transforming the requirement specification document (RSD) into a corresponding structured requirement specification document (SRD) which specifies each requirement in a predetermined template form comprising for each requirement a set of requirement attributes;
(b) means for retransforming the structured requirement specification document (SRD) into an updated requirement specification document (SRD') until each requirement attribute fulfils a predetermined syntactical and semantical attribute definition of said requirement attribute.

15. The system according to claim 14 wherein said means for transforming and said means for retransforming are formed by data processing units.

16. The system according to claim 15 wherein a natural language processing unit analyses and extracts requirements according to a natural language processing definition document (NLPDD) which defines rules of the natural language in which the initial requirement specification document (RSD) is written and according to an imperative definition document (IDD) which describes imperatives used by the structured requirement specification document (SRD) to transform iteratively the requirement specification document (RSD) into a corresponding structured requirement specification document (SRD).

17. The system according to claim 16 wherein said natural language processing unit comprises an inference engine and a data base.

18. A computer program comprising instructions for performing the method according to claims 1 - 13.

19. A data carrier for storing the computer program according to claim 18.
